# EUROPEAN PATENT APPLICATION

(11) **EP 3 232 176 A1**
(43) Date of publication of application: **18.10.2017**
(21) Application number: 16196819.3
(22) Date of filing: 02.11.2016
(51) Int. Cl.: G01M 1/00, G01M 13/00, G01M 15/00, G01M 17/00

(54) **CONTROL APPARATUS FOR ROTATING DEVICE**

(30) Priority: 13.04.2016 TW 105111445
(71) Applicant: Signal Technology Instrument Inc., Taoyuan City 33751 (TW); Chiu Chau enterprise Co., Ltd., Taoyuan City 325 (TW)
(72) Inventor: Su, Chih-Hui, 337 Dayuan Dist., Taoyuan City (TW); Li, Tien-Hua, 270 Su'ao Township, Yilan County (TW); Hsu, Chih-Wei, 325 Longtan Dist., Taoyuan City (TW); Chen, Chih-Jung, 709 Annan Dist., Tainan City (TW); Chuang, Yu-Chieh, 337 Dayuan Dist., Taoyuan City (TW)
(74) Representative: 2K Patentanwälte Blasberg Kewitz & Reichel

(57) **Abstract**

A control apparatus for rotating device includes a plurality information sensors and a controller. The information sensors are coupled to the rotating device for sensing temperature information, acoustic information and vibration information. The controller receives the temperature information, the acoustic information and the vibration information at a plurality of consecutive sampling time points to respectively obtain a plurality of sampled temperature values, a plurality of sampled noise values, and a plurality of sampled vibration values, during a time period. The controller generates a plurality of status signals corresponding to the sampling time points according to the sampled temperature values, the sampled noise values and the sampled vibration values. The controller generates a control signal according to the status signals, and transports the control signal to control an operation of the rotating device.

## Description

### BACKGROUND OF THE INVENTION

### 1. Field of the Invention

The invention relates to a control apparatus for a rotating device, and particularly relates to a control apparatus for a rotating device having a self-inspecting function.

### 2. Description of Related Art

In the monitoring system of a rotating device, it is common in the conventional technology to provide a corresponding monitoring device to monitor whether the rotating apparatus functions are abnormal or not. However, the conventional technology only enables analyzing and storing information obtained through monitoring then correspondingly sends a warning signal to the user. In other words, even if the rotating device exhibits a severely abnormal sign, an action to eliminate the anomaly can only be taken by the user after the user notices the anomaly and arrives the site. Thus, the best timing to eliminate the anomaly may consequently be missed, which causes abnormal productions of the production line, and thus damages the machines, or even results in environmental pollution.

### SUMMARY OF THE INVENTION

It is an object of the present invention to provide an enhanced control apparatus for a rotating device configured to at least mitigate the above drawbacks of convention devices. Particularly, according to the present invention there is to be provided an enhanced control apparatus for a rotating device that allows the rotating device to meet the requirement of smart manufacturing device.

This problem is solved by a control apparatus for a rotating device as claimed in claim 1. Further advantageous embodiments are the subject-matter of the dependent claims.

A control apparatus for a rotating device according to an embodiment of the invention includes a plurality of information sensors and a controller. The information sensors are coupled to the rotating device and respectively detect temperature information, acoustic information, and vibration information of the rotating device. The controller is coupled to the information sensors, and receives the temperature information, the acoustic information, and the vibration information. The controller receives the temperature information, the acoustic information, and the vibration information at a plurality of consecutive sampling time points to obtain a plurality of sampled temperature values, a plurality of sampled noise values, and a plurality of sampled vibration values. The controller generates a plurality of status signals respectively corresponding to the sampling time points based on the sampled temperature values, the sampled noise values, and the sampled vibration values. In addition, the controller generates a control signal based on the status signals and transports the control signal to the rotating device to control an operation of the rotating device.

According to an embodiment of the invention, the controller receives a plurality of temperature threshold values and a plurality of vibration threshold values, and compares the respective sampled temperature values to the temperature threshold values to generate a plurality of temperature analysis results, it also compares the respective sampled vibration values to the vibration threshold values to generate a plurality of vibration analysis results, to perform a high frequency spectrum analysis on the sampled noise values to generate a plurality of spectrum analysis results, and perform computation on the respective temperature analysis results, the respective sampled vibration values, and the respective spectrum analysis results corresponding to the respective sampling time points to generate the respective status signals.

According to an embodiment of the invention, the temperature threshold values include a first temperature threshold value and a second temperature threshold value, the vibration threshold values include a first vibration threshold value and a second vibration threshold value, when the respective sampled temperature values corresponding to the respective sampling time points are smaller than the first temperature threshold value, the respective sampled vibration values are smaller than the first vibration threshold value, and the respective spectrum analysis results are normal, the computation generates the respective status signals corresponding to a normal status of the device. The first temperature threshold value is smaller than the second temperature threshold value, and the first vibration threshold value is smaller than the second vibration threshold value.

According to an embodiment of the invention, when the respective sampled temperature values corresponding to the respective sampling time points are between the first temperature threshold value and the second temperature threshold value, the computation generates the respective status signals corresponding to an alarming status of the device.

According to an embodiment of the invention, when the respective sampled vibration values corresponding to the respective sampling time points are between the first vibration threshold value and the second vibration threshold value, the computation generates the respective status signals corresponding to an alarming status of the device.

According to an embodiment of the invention, when the respective spectrum analysis results corresponding to the respective sampling time points are not normal, the computation generates the respective status signals corresponding to an alarming status of the device.

According to an embodiment of the invention, when the respective sampled temperature values corresponding to the respective sampling time points exceed the second temperature threshold value, the computation generates the respective status signals corresponding to a dangerous status of the device.

According to an embodiment of the invention, when the sampled vibration values exceed the second vibration threshold value, the computation generates the respective status signals corresponding to a dangerous status of the device.

According to an embodiment of the invention, the control apparatus further includes a remote system. The remote system is coupled to the controller and receives the status signals. In addition, the remote system generates device status determination information based on a status change condition signals within a time interval.

According to an embodiment of the invention, the remote system generates the device status determination information corresponding to a danger alert when at least one of the status signals corresponds to a dangerous status of the device.

According to an embodiment of the invention, the remote system generates the device status determination information corresponding to an alert status when the number of times that the status signals correspond to the alarming status of the device exceeds N. Here, N is a positive integer greater than 1.

According to an embodiment of the invention, the controller quantifies the status signals to obtain a plurality of values, the remote system calculates an average of the values within the time interval, and generates the device status determination information corresponding to a monitoring status when the average exceeds a predetermined threshold value.

According to an embodiment of the invention, the remote system further receives scheduling information of the rotating device, and adjusts the scheduling information based on the device status determination information to generate adjusted scheduling information.

According to an embodiment of the invention, when the control apparatus transports one of the status signals to turn off the rotating device, the control apparatus further transports a start signal to a backup device.

According to an embodiment of the invention, when the status signals correspond to an alarming status of the device, the controller transports a start pollution discharging signal to turn on a pollution discharging control valve of the rotating device.

Based on the above, the controller is provided in the embodiments of the invention to obtain the sampled temperature values, the sampled noise values, and the sampled vibration values at the consecutive sampling time points, and to generate the status signals controlling the operation of the rotating device based on the sampled temperature values, the sampled noise values, and the sampled vibration values. Accordingly, in the embodiments of the invention, the rotating device may be monitored and adjusted based on an actual status of the rotating device operation and status change of a plurality of parameters. Thus, the control apparatus according to the embodiments of the invention is able to timely take emergency responding measures to the rotating device in correspondence with a working status of the rotating device and notify the user, so as to offer the function of smart manufacturing device.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view illustrating a control apparatus for a rotating device according to an embodiment of the invention.
FIG. 2 is a schematic view illustrating an example of a controller according to an embodiment of the invention.
FIG. 3 is a controlling flowchart of a controller according to an embodiment of the invention.
FIG. 4 is a schematic block view illustrating a control apparatus for a rotating device according to another embodiment of the invention.
FIG. 5 is a working flowchart of a remote device according to an embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or alike parts.

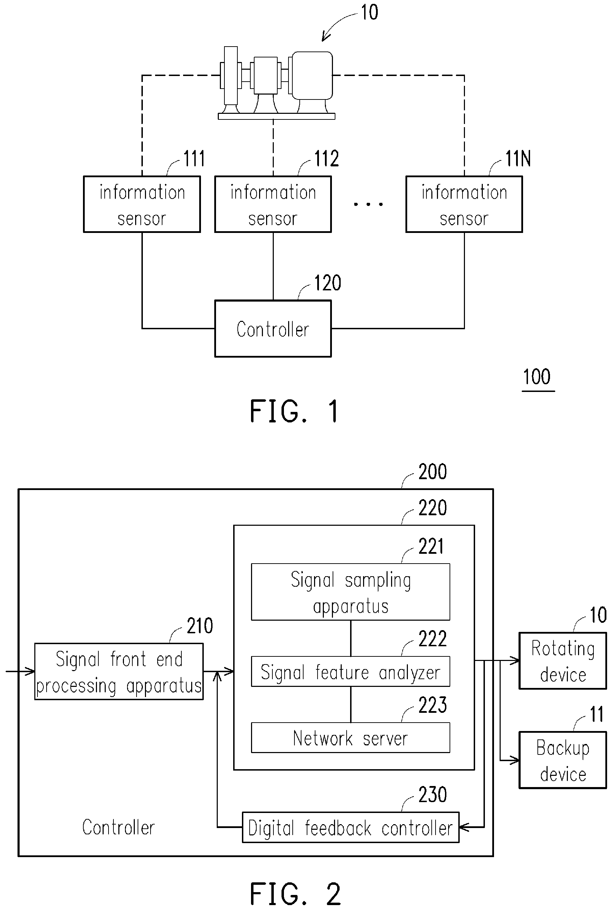

Referring to FIG. 1, FIG. 1 is a schematic view illustrating a control apparatus for a rotating device according to an embodiment of the invention. A control apparatus 100 for a rotating device 10 includes information sensors 111 to 11N and a controller 120. The information sensors 111 to 11N are coupled to the rotating device 10, and are respectively configured to detect real-time temperature information, acoustic information and vibration information of the rotating device 10. The controller 120 is coupled to the information sensors 111 to 11N and receives the temperature information, the acoustic information, and the vibration information transported by the information sensors 111 to 11N at a plurality of fixed sampling time points within a time interval, thereby obtaining a plurality of sampled temperature values, a plurality of sampled noise values, and a plurality of sampled vibration values. Furthermore, the controller 120 performs computation on the sampled temperature values, the sampled noise values, and the sampled vibration values, so as to generate a plurality of status signals corresponding to the sampling time points accordingly.

The controller 120 generates a control signal based on the status signals. The control signal may be transported to the rotating device 10 to control an operation of the rotating device 10 accordingly.

In terms of operational details, the controller 120 may set a plurality of temperature threshold values and a plurality of vibration threshold values. The controller 120 compares the respective sampled temperature values and the temperature threshold values, so as to generate a plurality of temperature analysis results. The controller 120 further compares the respective sampled vibration values and the vibration threshold values, so as to generate a plurality of vibration analysis results. Moreover, the controller 120 may further perform a high frequency spectrum analysis on the received sampled noise values, so as to generate a plurality of spectrum analysis results. The controller 120 may further perform computation on the respective temperature analysis results, the respective vibration analysis results, and the respective spectrum analysis results at the same sampling time points to generate the respective status signals.

For example, the temperature threshold values may include a first temperature threshold value and a second temperature threshold value. The vibration threshold values may include a first vibration threshold value and a second vibration threshold value. In addition, the second temperature threshold value is greater than the first temperature threshold value, and the second vibration threshold value is greater than the first vibration threshold value. When the controller 120 determines that the sampled temperature value is smaller than the first temperature threshold value, the sampled vibration value is smaller than the first vibration threshold value, and the corresponding spectrum analysis result is normal, the controller 120 may generate a status signal corresponding to a normal status of the device.

When the controller 120 determines that the sampled temperature value is between the first temperature threshold value and the second temperature threshold value, but the sampled vibration value is smaller than the first vibration threshold value (regardless how the corresponding spectrum analysis result may be), the controller 120 may generate a status signal corresponding to an alarming status of the device. When the controller 120 determines that the sampled temperature value is between the first temperature threshold value and the second threshold value, and the sampled vibration value is also between the first vibration threshold value and the second vibration threshold value (regardless how the corresponding spectrum analysis result may be), the controller 120 may generate the status signal corresponding to the alarming status of the device. When the controller 120 determines that the sampled temperature value is smaller than the first temperature threshold value, and the sampled vibration value is between the first vibration threshold value and the second vibration threshold value (regardless how the corresponding spectrum analysis result may be), the controller 120 may similarly generate the status signal corresponding to the alarming status of the device. If the spectrum analysis carried out by the controller 120 indicates that the intensity of a high frequency noise exceeds a threshold value, the controller 120 may directly generate the status signal corresponding to the alarming status of the device.

Accordingly, it should be understood that the status signals in the embodiments of the invention may be further categorized into a plurality of levels. For example, when the sampled temperature value is between the first and second temperature threshold values, but the sampled vibration value is smaller than the first vibration threshold value and the spectrum analysis result is normal, the controller 120 may generate a status signal having a lower value (e.g., value A) but corresponding to the alarming status of the device. When the sampled temperature value is smaller than the first temperature threshold value, but the sampled vibration value is between the first and second vibration threshold values and the spectrum analysis result is normal, the controller 120 may generate the status signal having the value A. When the sampled temperature value is between the first and second temperature threshold values, the sampled vibration value is between the first and second vibration threshold values, but the spectrum analysis result is normal, the controller 120 may generate a status signal having a higher value (e.g., value B, wherein value B is greater than value A) and corresponding to the alarming status of the device. Moreover, when the sampled temperature value is between the first and second temperature threshold values, the sampled vibration value is between the first and second vibration threshold values, and the spectrum analysis result is not normal, the controller 120 may generate a status signal having the highest value (e.g., value C, wherein value C is greater than value B) and corresponding to the alarming status of the device.

When the sampled temperature value is greater than the second temperature threshold value, no matter how the relation between the sampled vibration value and the vibration threshold value is, the controller 120 may generate a status signal corresponding to a dangerous status of the device. In the same time, when the sampled vibration value is greater than the second vibration threshold value, no matter how the relation between the sampled temperature value and the temperature threshold value is, the controller 120 may generate the status signal corresponding to the dangerous status of the device.

Here, the controller 120 may set values corresponding to the status signal corresponding to the dangerous status of the device based on the sampled temperature values, the sampled vibration values, and the spectrum analysis results. Specifically, when only the sampled temperature value is greater than the second temperature threshold value, but the sampled vibration value is not greater than the second vibration threshold value and the spectrum analysis result is normal, the controller 120 may generate a status having a lower value (e.g., value D, wherein value D may be greater than value C) and corresponding to the dangerous status of the device. When only the sampled vibration value is greater than the second vibration threshold value, but the sampled temperature value is not greater than the second temperature threshold value and the spectrum analysis result is normal, the controller 120 may also generate the status signal having the value D. When the sampled vibration value is greater than the second vibration threshold value and the sampled temperature value is greater than the second temperature threshold value, but the spectrum analysis result is normal, the controller 120 may generate a status signal having a greater value (e.g., value E, wherein value E is greater than value D) and corresponding to the dangerous status of the device. When the sampled vibration value is greater than the second vibration threshold value, the sampled temperature value is greater than the second temperature threshold value, and the spectrum analysis result is not normal, the controller 120 may generate a status signal having the greatest value (e.g., value F, wherein value F is greater than value E) and corresponding to the dangerous status of the device.

The controller 120 may generate the control signal based on the plurality of status signals within the time interval. The control signal may be transported to the rotating device 10. In addition, the rotating device may perform a self-troubleshooting process based on the control signal. For example, the control signal may be a start pollution discharging signal. The rotating device 10 may perform a waste water (or waste gas) discharging process by turning on a pollution control valve based on the start pollution discharging signal. In addition, in a period of time, when the pollution control valve is open, the controller 120 may be notified of whether the rotating device 10 resumes a normal operation based on the status signal. If the rotating device 10 is unable to resume a normal operation, the controller 120 may turn off the rotating device 10 by using the control signal. In the meantime, to prevent the production line from being stopped, the controller 120 may start a backup device by using the control signal.

Referring to FIG. 2, FIG. 2 is a schematic view illustrating an example of a controller according to an embodiment of the invention. A controller 200 includes a signal front end processing apparatus 210, a core circuit 220, and a digital feedback controller 230. An output end of the core circuit 220 is coupled to the rotating device 10 under control, and may also be coupled to a backup device 11. The signal front end processing apparatus 210 may be coupled to the information sensors and receive the sensing signals (e.g., the temperature information, the acoustic information, and acceleration information, etc.), and perform a preliminary processing process , such as a signal amplifying process, a noise eliminating process, etc., on a signal, so as to facilitate a signal-to-noise ratio of the signal.

In addition, the core circuit 220 includes a signal sampling apparatus 221, a signal feature analyzer 222, and a network server 223. The signal sampling apparatus 221 may sample the temperature information, the acoustic information, and the vibration information transported by the information sensors to generate the sampled temperature values, the sampled noise values, and the sampled vibration values. The signal feature analyzer 222 may capture feature parameters in the temperature information, the acoustic information, and the vibration information to obtain valid information. The network server 223 enables the controller 200 to exchange information with a remote server through the Internet.

The digital feedback controller 230 is coupled between an input end and an output end of the core circuit 220 and makes the controller 200 a closed loop. With the closed-loop framework, the stability of the information processing process of the controller 200 may be facilitated.

In this embodiment, the rotating device 10 and the backup device 11 may be devices with the same structure. In addition, when the rotating device 10 is closed, the backup device 11 may be started based on a starting command of the controller 200.

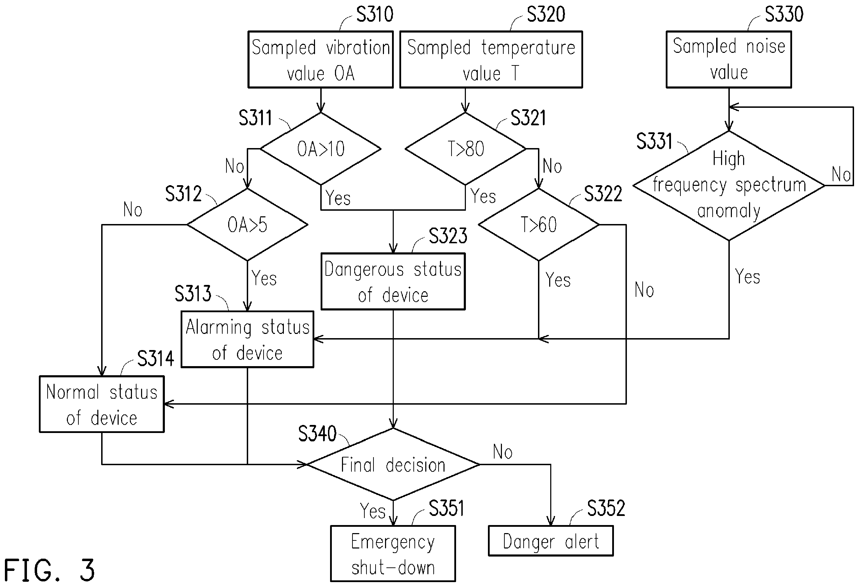

Referring to FIG. 3, FIG. 3 is a controlling flowchart of a controller according to an embodiment of the invention. At Step S310 and S320, a sampled vibration value OA and a sampled temperature value T are respectively obtained. In addition, at Step S330, a sampled noise value is obtained. At Step S311, the sampled vibration value OA is compared with the second vibration threshold value (e.g., a value equal to 10). If the sampled vibration value OA is greater than 10, status information corresponding to the dangerous status of the device is generated (Step S323). Alternatively, if the sampled vibration value OA is not greater than 10, Step S312 is performed to compare the sampled vibration value OA and the first vibration threshold value (e.g., a value equal to 5). If the comparison result at Step S312 indicates that the sampled vibration value OA is greater than 5, Step S313 is performed to generate status information corresponding to the alarming status of the device. If the comparison result at Step S312 indicates that the sampled vibration value OA is not greater than 5, Step S314 is performed to generate status information corresponding to a normal status of the device.

Moreover, if the sampled temperature value T is greater than the second temperature threshold value (e.g., a value equal to 80) at Step S321, the status information corresponding to the dangerous status of the device is generated (Step S323). If it is determined at Step S321 that the sampled temperature value T is not greater than 80, Step S322 is performed to determine whether the sampled temperature value T is greater than the first temperature threshold value (e.g., a value equal to 60). If it is determined at Step S322 that the sampled temperature value T is greater than 60, Step S313 is performed to generate the status information corresponding to the alarming status of the device. Alternatively, if it is determined at Step S322 that the sampled temperature value T is not greater than 60, Step S314 is carried out to generate the status information corresponding to the normal status of the device.

Furthermore, a detection process on a high frequency spectrum of the sampled noise value is performed at Step S331. When an intensity of a sampled noise value at a specific frequency is too high, Step S323 is performed to generate the status information corresponding to the dangerous status of the device.

Based on the descriptions above, the status information generated at Step S314, S313, and S323 may be sorted at Step S340, and a final decision may be made to determine whether the rotating device is in the dangerous status or the alarming status. If the rotating device is in the alarming status, a danger alert may be sent at Step S352. If the rotating device is in the dangerous status, the rotating device is shut down for an emergency at Step S351.

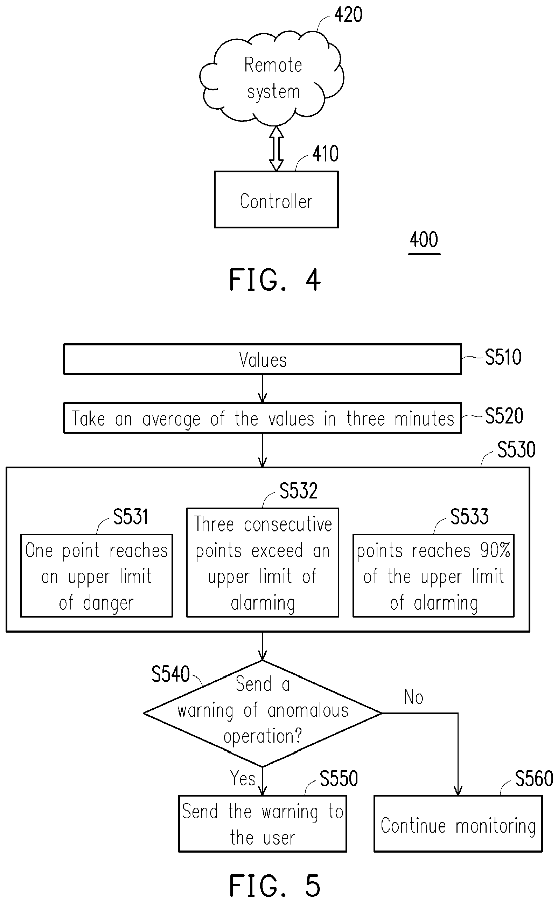

Referring to FIG. 4, FIG. 4 is a schematic block view illustrating a control apparatus for a rotating device according to another embodiment of the invention. A control apparatus 400 further includes a remote system 420. The remote system 420 is coupled to the controller 410, and may receive the status signals generated by the controller 410. In addition, the remote system 420 may generate device status determination information based on a condition of the status signals change within the time interval, and send the device status determination information to the user. In other words, the user is enabled to be notified of an operating status of the rotating device in the protection line via the Internet regardless of the user's location.

Regarding operational details of the remote device 420, FIG. 5 is a working flowchart of a remote device according to an embodiment of the invention. At Step S510, the remote device 420 receives a plurality of the corresponding status signal values generated by the controller 410. In addition, at Step S20, the remote device 420 may calculate averages of the received values within a predetermined time interval (e.g., 3 minutes). Then, at Step S530, when it is determined that one of the averages reaches an upper limit of danger (Step S531), the device status determination information is set as not normal. Alternatively, if it is determined that the averages exceed an upper limit of alarming but does not reach the upper limit of danger for a plurality of consecutive times (e.g., three consecutive times) (Step S532), the device status determination information is set as active alarming. Another alternative is that, if it is determined that the averages exceed a value of a proportion (e.g., 90%) of the upper limit of alarming but does not reach the upper limit of alarming for a plurality of consecutive times (e.g., eight consecutive times) (Step S533), the device status determination information is set as general alarming.

At Step S540, whether the rotation of the rotating device is not normal is determined based on a result of determination obtained at Step S530. If the rotation of the rotating device is not normal, Step S550 is performed to send a warning to the user. If the rotation of the rotating device is normal, the monitoring continues. Regarding details of Step S540, the remote device 420 may determine based on a condition of the device status change determination information. In addition, if the device status determination information indicates a gradual change from active alarming to general alarming, it is indicated that the operating status of the rotating device gets better. Thus, it is not necessary to send the warning to the user. Alternatively, if the device status determination information indicates a gradual change from general alarming to active alarming, or the device status determination information remains to be active alarming for a period of time, it is necessary to send the warning to the user. Of course, if the device status determination information is set as abnormal, it is necessary to send a warning to the user.

In another embodiment of the invention, the remote system 420 may also generate the device status determination information corresponding to the alarming status when the number of times that the status signal corresponds to the alarming status of the device is greater than N. The value of N is predetermined and is a positive integer greater than 1.

It should be noted that, to better control a yield capability of the rotating device, the remote system 420 may receive production scheduling information of the rotating device. Also, the rotating system 420 may adjust the scheduling information based on the generated device status determination information, so as to generate adjusted scheduling information. For example, when the remote system 420 sets that the rotating device is in the status of active alarming, the remote system 420 may reduce the number of working hours or an output of the rotating device, and transport the adjusted scheduling information to the user for the user's reference.

Moreover, the remote system 420 may further provide a plurality of parameters for the user to input and correct via the Internet. Examples of such parameters include the upper limit of danger, the upper limit of alarming, the value of the proportion in the flowchart, the number of times of exceeding the upper limit of alarming in Step S532, the number of times in Step S533, and the duration of the time interval in Step S520, as shown in FIG. 5. In this way, the user is able to make active adjustments or troubleshoot based on the status of the rotating device provided by the remote system 420.

In view of the foregoing, the change condition of various parameters of the rotating device within a time interval is detected in the embodiments of the invention. In addition, the decisions as to whether the rotating device or the backup device is turned on or off, or whether to perform a troubleshooting process are made based on the detected status signal, so as to offer a function of smart devices.

## Claims

1. A control apparatus (100) for a rotating device, comprising:
a plurality of information sensors (111, 112), coupled to the rotating device (10) and respectively detecting temperature information, acoustic information, and vibration information of the rotating device (10); and
a controller (120), coupled to the information sensors (111, 112), receiving the temperature information, the acoustic information, and the vibration information, wherein the temperature information, the acoustic information, and the vibration information are received by the controller (120) at a plurality of consecutive sampling time points to obtain a plurality of sampled temperature values, a plurality of sampled noise values, and a plurality of sampled vibration values, and the controller (120) generates a plurality of status signals respectively corresponding to the sampling time points based on the sampled temperature values, the sampled noise values, and the sampled vibration values,
wherein the controller (120) generates a control signal based on the status signals and transports the control signal to the rotating device to control an operation of the rotating device (10).

2. The control apparatus (100) as claimed in claim 1, wherein the controller (120) receives a plurality of temperature threshold values and a plurality of vibration threshold values, respectively compares the sampled temperature values to the temperature threshold values to generate a plurality of temperature analysis results, respectively compares the sampled vibration values to the vibration threshold values to generate a plurality of vibration analysis results, performs a high frequency spectrum analysis on the sampled noise values to generate a plurality of spectrum analysis results, and respectively perform computation on the temperature analysis results, the respective sampled vibration values, and the respective spectrum analysis results corresponding to the respective sampling time points to generate the respective status signals.

3. The control apparatus (100) as claimed in claim 2, wherein the temperature threshold values comprise a first temperature threshold value and a second temperature threshold value, the vibration threshold values comprise a first vibration threshold value and a second vibration threshold value, corresponding to each of the respective sampling time points, when each of the sampled temperature values is smaller than the first temperature threshold value, each of the sampled vibration values is smaller than the first vibration threshold value, and each of the spectrum analysis results is normal, the computation generates the respective status signals corresponding to a normal status of the device,
wherein the first temperature threshold value is smaller than the second temperature threshold value, and the first vibration threshold value is smaller than the second vibration threshold value.

4. The control apparatus (100) as claimed in claim 3, wherein when each of the sampled temperature values corresponding to the each of sampling time points is between the first temperature threshold value and the second temperature threshold value, the computation generates the respective status signals corresponding to an alarming status of the device.

5. The control apparatus (100) as claimed in claim 3, wherein when each of the respective sampled vibration values corresponding to each of the sampling time points is between the first vibration threshold value and the second vibration threshold value, the computation generates the respective status signals corresponding to an alarming status of the device.

6. The control apparatus (100) as claimed in claim 3, wherein when each of the spectrum analysis results corresponding to each of the sampling time points is not normal, the computation generates each of the status signals corresponding to an alarming status of the device.

7. The control apparatus (100) as claimed in claim 3, wherein when each of the sampled temperature values corresponding to each of the sampling time points exceeds the second temperature threshold value, the computation generates the respective status signals corresponding to a dangerous status of the device.

8. The control apparatus (100) as claimed in claim 3, wherein when each of the sampled vibration values exceeds the second vibration threshold value, the computation generates the respective status signals corresponding to a dangerous status of the device.

9. The control apparatus (400) as claimed in any of the preceding claims, further comprising:
a remote system (420), coupled to the controller (410) and receives the status signals, wherein the remote system generates device status determination information based on the status signals change condition within a time interval.

10. The control apparatus (400) as claimed in claim 9, wherein the remote system (420) generates the device status determination information corresponding to a danger alert when at least one of the status signals corresponds to a dangerous status of the device.

11. The control apparatus (400) as claimed in claim 9 or 10, wherein the remote system (420) generates the device status determination information corresponding to an alarming status when the number of times that the status signals correspond to the alarming status of the device exceeds N, N being a positive integer greater than 1.

12. The control apparatus (400) as claimed in any of claims 9 to 11, wherein the controller (410) quantifies the status signals to obtain a plurality of values, and the remote system (420) calculates an average of the values within the time interval and generates the device status determination information corresponding to a monitoring status when the average exceeds a predetermined threshold value.

13. The control apparatus (400) as claimed in any of claims 9 to 12, wherein the remote system (420) further receives scheduling information of the rotating device (10), and adjusts the scheduling information based on the device status determination information to generate adjusted scheduling information.

14. The control apparatus (100) as claimed in any of the preceding claims, wherein when the control apparatus (100) transports one of the status signals to turn off the rotating device (10), the control apparatus (100) further transports a start signal to a backup device (11).

15. The control apparatus (100) as claimed in any of the preceding claims, wherein when the status signals correspond to an alarming status of the device, the controller (120) transports a start pollution discharging signal to turn on a pollution discharging control valve of the rotating device.

16. The control apparatus (100) as claimed in any of the preceding claims, wherein the controller (200) comprises:
a signal front end processing apparatus (210), coupled to the information sensors, receiving the temperature information, the acoustic information, and the vibration information, and performing a signal front end processing process on the temperature information, the acoustic information, and the vibration information;
a core circuit (220), coupled to the signal front end processing apparatus, sampling the temperature information, the acoustic information, and the vibration information to respectively generate the sampled temperature values, the sampled noise values, and the sampled vibration values, capturing a feature parameter of each of the sampled temperature values, each of the sampled noise values, and each of the sampled vibration values, and generating the status signals respectively corresponding to the sampling time points based on the feature parameters of the sampled temperature values, the sampled noise values, and the sampled vibration values; and
a digital feedback controller (230), coupled between an input end and an output end of the core circuit (220).
